# EUROPEAN PATENT APPLICATION

(11) **EP 1 391 468 A1**
(43) Date of publication of application: **25.02.2004**
(21) Application number: 03254912.3
(22) Date of filing: 07.08.2003
(51) Int. Cl.: C08F 6/00, C08F 6/28

(54) **Resin cleaning method**

(30) Priority: 19.08.2002 US 404472 P
(71) Applicant: ROHM AND HAAS COMPANY, Philadelphia, Pennsylvania 19106-2399 (US)
(72) Inventor: Bohling, James Charles, Lansdale, Pennsylvania 19446 (US); Kinzey, Marlin Kenneth, Philadelphia, Pennsylvania 19147 (US); Maikner, John Joseph, Zionsville, Pennsylvania 18092 (US); Zabrodski, William Joseph, Lansdale, Pennsylvania 19446 (US)
(74) Representative: Kent, Venetia Katherine

(57) **Abstract**

The present invention relates to a resin cleaning method using fewer solvents.

## Description

### BACKGROUND OF THE INVENTION

The cleaning of resins is an important part of the resin lifecycle. For example, when functionalizing resins discoloration may occur and metal salts are often produced. These contaminants must be washed from the resin before use. The art has attempted to address the issue of resin cleaning. Specifically, Hoekstra, et al. (Tetrahedron Letters, 38, 15, 1997 pg 2629-2632) detail the use of aqueous dimethyl formamide , dimethyl formamide (DMF), tetrahydrofuran (THF) and dichloromethane (DCM) between each reaction performed during functionalization. Webber et al. (US5563220) disclose the use of DCM, methanol, and DCM again. Orosz et al. (Tetrahedron Letters, 39, 1998, 3241) disclose the use of numerous solvents including dioxane-water-HCl, DMF, dioxane-water, methylethyl ketone (MEK), isopropanol, methanol, acetic acid and other solvents.

Applicants have contributed to the art by discovering an economical resin cleaning method. Applicants' invention uses a single primary swelling solvent which can be mixed with water, the polarity is then modified with acidic, basic or neutral water or acidic, basic or neutral C₁₋₆ alcohols, rather than hazardous organic chemicals. The use of a single primary swelling solvent and a polarity modifier solvent leads to improved recoverability, and minimizes hazardous wastes. The volumes and types of hazardous materials stored on site are also minimized.

### SUMMARY OF THE INVENTION

The present invention relates to a resin cleaning method comprising the steps of:
(a) contacting said resin with a swelling solvent that can be homogenously mixed with water;
(b) contacting said resin, as treated in step (a), with a polarity modifier solvent selected from the group consisting of acidic water, basic water, neutral water, acidic C₁₋₆ alcohol, basic C₁₋₆ alcohol, neutral C₁₋₆ alcohol and mixtures thereof.

### DETAILED DESCRIPTION OF THE INVENTION

The present invention relates to a resin cleaning method comprising the steps of :
(a) contacting said resin with a swelling solvent that can be homogenously mixed with water;
(b) contacting said resin ,as treated in step (a), with a polarity modifier solvent selected from the group consisting of acidic water, basic water, neutral water, acidic C₁₋₆ alcohol, basic C₁₋₆ alcohol, neutral C₁₋₆ alcohol and mixtures thereof.

Resins which may be treated by the process of the present invention include, but are not limited to, cross-linked polystyrene, functionalized cross-linked polystyrene, cross-linked polymers of acrylic esters, cross-linked polymers of methacrylic esters, cross-linked polymers of acrylic amides, cross-linked polymers of methacrylic amides and mixtures thereof. More preferred resins are cross-linked polystyrene, functionalized cross-linked polystyrene and cross-linked polymers of acrylic esters. The most preferred resin is cross-linked polystyrene.

Swelling solvents useful in the practice of the present invention that can be homogenously mixed with water useful in the practice of the present invention are selected from the group including, but not limited to tetrahydrofuran (THF), acetone, dimethyl formamide (DMF), N-methylpyrollidone (NMP), Ethyl Ether, dioxane and mixtures thereof. More preferred swelling solvents are THF, acetone and DMF. The most preferred swelling solvent is THF.

After the resin is contacted with the swelling solvent, as described in step (a), a polarity modifier solvent ,selected from the group consisting of acidic water, basic water, neutral water, acidic C₁₋₆ alcohol, basic C₁₋₆ alcohol, neutral C₁₋₆ alcohol and mixtures thereof, is added to the resin in contact with the swelling solvent.

Acidic water is prepared by combining water with an acid such as hydrochloric (HCl) or Sulfuric Acid (H₂SO₄).
Basic water is prepared by combining water with a base such as sodium hydroxide (NaOH) or sodium bicarbonate (NaHCO₃)
Acidic C₁₋₆ alcohol is prepared by combining an alcohol such as methanol with an acid such as hydrochloric (HCl) or Sulfuric Acid (H₂SO₄).
Basic C₁₋₆ alcohol is prepared by combining an alcohol with a base such as sodium hydroxide (NaOH) or sodium bicarbonate (NaHCO₃)
Preferred neutral C₁₋₆ not limited to alcohols are methanol, ethanol, ethylene glycol, n or iso propanol, propylene glycol, all isomers of butanol or butanediol, all isomers of pentanol or pentanediol, all isomers of hexanol or hexananediol, and mixtures thereof. More preferred neutral C₁₋₆ alcohols are methanol, ethanol and ethylene glycol.

The most preferred polarity modifying solvents are neutral water and acidic water.

The following non limiting examples illustrate the practice of the present invention.

### Example 1.

1. Crude polymer supported 2'chlorobenzophenone ( said polymer is polystyrene cross-linked with 1% divinylbenzene) prepared by a Friedel-Crafts reaction is charged to a fritted filter. The reaction liquor is drained to resin level.
2. 1 bed volume (BV) of THF is added to top of resin bed. The THF is allowed to plug flow drain. This step is repeated with a second BV of 4:1 THF:H₂O ( neutral water). All washes are performed with a flow rate of 4BV/Hr or less.
3. 1BV of THF is added to re-suspend the resin. The resin is drained and 1BV of THF is added to top of the resin. Allow to plug flow drain to level.
4. Step #3 is repeated.

### Example 2.

1. Crude polymer supported 2'chlorotritylalcohol ( said polymer is polystyrene cross-linked with 1% divinylbenzene) prepared from an aryl lithium or Grignard reaction is charged to a fritted Buchner funnel. The reaction liquor is allowed to drain to resin level.
2. 1BV of a 4:1 THF:10% HCI solution( acidic water) is added to re-suspend the resin and allowed to drain slowly to resin level.
3. 1BV of THF is added to re-suspend the resin and allowed to drain slowly to level.
4. Step 3 is repeated using THF two additional times.

### Example 3.

1. Crude polymer supported 2'chlorotritylalcohol ( said polymer is polystyrene cross-linked with 1% divinylbenzene ) prepared from an aryl lithium or Grignard reaction is charged to a fritted Buchner funnel. The reaction liquor is allowed to drain to resin level.
2. 1BV of a 4:1 THF:10% sulfuric acid( acidic water) solution is added to re-suspend the resin and allowed to drain slowly to resin level.
3. 1BV of THF is added to re-suspend the resin and allowed to drain slowly to resin level.

Step 3. is repeated using THF two additional times.

### Example 4.

1. Crude polymer supported 2'chlorobenzophenone ( said polymer is polystyrene cross-linked with 1% divinylbenzene ) prepared by a Friedel-Crafts reaction is charged to fritted filter. The reaction liquor is drained to resin level.
2. 1BV of THF is added to the top of the resin bed and allowed to plug flow drain. This step is repeated with a second 1BV of 4:1 THF:methanol ( neutral C₁₋₆ alcohol). All washings are performed with a flow rate of 4BV/Hr or less.
3. 1BV of THF is added to re-suspend the resin. It is allowed to drain slowly to resin level. 1BV of THF is then added to the top of the resin and allowed to plug flow drain to resin level.
4. Step #3 is repeated.

## Claims

1. A resin cleaning method comprising the steps of :
(a) contacting said resin with a swelling solvent that can be homogenously mixed with water;
(b) contacting said resin ,as treated in step (a), with a polarity modifier solvent selected from the group consisting of acidic water, basic water, neutral water, acidic C₁₋₆ alcohol, basic C₁₋₆alcohol, neutral C₁₋₆ alcohol and mixtures thereof

2. A resin cleaning method according to Claim 1, wherein said swelling solvent that can be homogenously mixed with water is selected from the group consisting of THF, acetone and DMF.

3. A resin cleaning method according to Claim 2, wherein said polarity modifier solvent is selected from the group consisting of C₁₋₆ alcohols and acidic water, and mixtures thereof.
